(19) **Europäisches Patentamt**
**European Patent Office**
**Office européen des brevets**

(11) **EP 1 290 872 B1**

(12) **FASCICULE DE BREVET EUROPEEN**

(45) Date de publication et mention
de la délivrance du brevet:
**28.11.2007 Bulletin 2007/48**

(51) Int Cl.:
*H04N 5/225* (2006.01)    *H04N 5/232* (2006.01)
*H04N 3/15* (2006.01)

(21) Numéro de dépôt: **01943570.0**

(86) Numéro de dépôt international:
**PCT/FR2001/001741**

(22) Date de dépôt: **06.06.2001**

(87) Numéro de publication internationale:
**WO 2001/095614 (13.12.2001 Gazette 2001/50)**

(54) **DISPOSITIF DE PRISE DE VUE EMBARQUE SUR UN ENGIN SPATIAL, ENGIN SPATIAL ET PROCEDE DE PRISE DE VUE LE COMPRENANT**

BILDAUFNAHMEVORRICHTUNG AN BORD EINES RAUMFAHRZEUGES, RAUMFAHRZEUG UND BILDAUFNAHMEVERFAHREN

IMAGE PICK-UP DEVICE ON BOARD A SPACE CRAFT, SPACE CRAFT AND IMAGE SENSING METHOD COMPRISING SAME

(84) Etats contractants désignés:
**AT BE CH CY DE DK ES FI FR GB GR IE IT LI LU MC NL PT SE TR**

(30) Priorité: **06.06.2000 FR 0007201**

(43) Date de publication de la demande:
**12.03.2003 Bulletin 2003/11**

(73) Titulaire: **CENTRE NATIONAL D'ETUDES SPATIALES**
**75001 Paris (FR)**

(72) Inventeur: **ANTIKIDIS, Jean-Pierre**
**F-31320 Castanet-Tolosan (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
**EP-A- 0 697 786**

- **PATENT ABSTRACTS OF JAPAN vol. 014, no. 225 (E-0927), 14 mai 1990 (1990-05-14) & JP 02 058481 A (NEC CORP), 27 février 1990 (1990-02-27)**
- **PATENT ABSTRACTS OF JAPAN vol. 016, no. 463 (P-1428), 25 septembre 1992 (1992-09-25) & JP 04 166920 A (TOSHIBA CORP), 12 juin 1992 (1992-06-12)**
- **PATENT ABSTRACTS OF JAPAN vol. 2000, no. 04, 31 août 2000 (2000-08-31) & JP 2000 013665 A (FUJI PHOTO FILM CO LTD), 14 janvier 2000 (2000-01-14)**

## Description

L'invention concerne le domaine de l'observation et de la prise de vue à partir d'un engin spatial. Plus particulièrement selon un aspect, l'invention est un dispositif de prise de vue embarqué sur un tel engin. Par exemple, ce dispositif de prise de vue peut comporter une matrice de capteur CCD (CCD est l'acronyme de l'expression anglo-saxonne Coupled Charge Device). De tels capteurs CCD seront également appelés ci-dessous "éléments photosensibles à transfert de charges".

Plus particulièrement encore l'invention concerne de tels dispositifs de prise de vue comportant des moyens pour compenser le bougé dû aux mouvements de l'engin spatial par rapport à l'objet que l'on veut observer et/ou dont on veut conserver une image.

A titre d'exemple, l'invention peut être utilisée pour réaliser des prises de vue du sol à partir d'un satellite. Dans ce cas, pour obtenir une bonne résolution, il faut que l'énergie atteignant chaque capteur, durant le temps pendant lequel le satellite parcours une distance correspondant au sol à la résolution visée, soit suffisante.

Les matrices de capteurs connues et disponibles sur le marché ayant des performances radiométriques nécessitent un temps de pause de l'ordre de 500 $\mu$s, pour un rapport signal sur bruit de 40 dB. Or pour un satellite se déplaçant à 8 km/s et une résolution $R_s$ égale à 1 m, le temps de pause ne peut excéder $^1/_{8.10^3}$ s, soit 120 $\mu$s. Ce temps de pause doit même être inférieur si l'on souhaite garder un piqué d'image correct.

La quantité de lumière recueillie par chaque capteur pendant un tel temps de pause est donc insuffisante.

Pour obtenir les quantités de lumière nécessaires, on a utilisé des télescopes ayant des ouvertures 3 à 4 fois supérieures à ce qui est imposé par les conditions de diffraction, de manière à recueillir 10 fois plus d'énergie. Mais de tels télescopes sont lourds et volumineux (leur poids croissant comme le carré de l'ouverture).

Une autre manière d'obtenir la quantité de lumière suffisante est de prolonger le temps de pose et de compenser le bougé durant ce temps de pause, en synchronisant le déplacement du dispositif de prise de vue par rapport au satellite, en fonction de la loi de mouvement de la trajectoire du satellite. Cette compensation du bougé est parfois réalisée en modifiant les trajets optiques, par un déplacement d'un miroir, d'une lentille, etc.

Le document US 5 460 341 décrit un dispositif de prise de vue destiné à être embarqué sur un satellite ou un autre engin spatial, comportant un système de compensation de bougé, pour corriger les déplacements le long d'un axe optique, les déplacements de focalisation de pièces optiques, la position du dispositif lui-même par rapport à l'engin sur lequel il est fixé, etc. Ce dispositif de compensation comprend des actionneurs linéaires pour ajuster la position du dispositif de prise de vue par rapport à l'engin spatial, par un déplacement contrôlé, selon plusieurs degrés de liberté. L'actionneur comporte un moteur à bobine mobile ou à aimant mobile. Ces actionneurs linéaires sont de type sans contact, c'est-à-dire qu'il n'y a pas de contact de friction entre les pièces mobiles les unes par rapport aux autres. Or de tels dispositifs deviennent inutilisables lorsque l'on cherche à obtenir une très haute résolution du mouvement de compensation. En effet dans ce cas, des déplacements extrêmement précis et des temps de réponse très faibles, sont requis, mais ne peuvent être obtenus avec ces dispositifs de prise de vue de l'art antérieur.

Le document EP-A-697 786 décrit un système embarqué d'imagerie spàtiale où un réseau de photodétecteurs est couplé à des moyens d'oscillation du réseau. Ces moyens d'oscillation peuvent être constitués de transducteurs piezo-électriques.

Un but de l'invention est de fournir des dispositifs de prise de vue avec un mécanisme de déplacement plus précis et ayant un temps de réponse très faible.

Ce but est atteint, selon l'invention, grâce à un Dispositif de prise de vue destiné a être embarqué sur un engin spatial, comportant au moins un capteur d'observation et des moyens (4, 5, 6, 7, 8, 9) pour le déplacement contrôlé dudit dispositif par rapport a l'engin spatial selon au moins un degré de liberté, caractérisé en ce que lesdits moyens de déplacement comportent au moins un transducteur en un matériau actif apte a se déformer de façon dynamique sous l'effet d'un champ électrique et/ou d'un champ magnétique variable, ainsi que des moyens de pilotage aptes a commander le transducteur afin déplacer le capteur d'observation suivant une loi de contrôle variable adaptée à la compensation des mouvements induits par la dynamique de vol du satellite.

Ce type de matériau permet d'obtenir un déplacement de l'ensemble du dispositif de prise de vue par rapport à l'engin spatial avec un positionnement rigide, une grande précision, quasiment sans inertie temporelle et sans utiliser de structures mécaniques proprement dites.

L'utilisation d'un matériau actif apte à se déformer sous l'effet d'un champ électrique et/ou d'un champ magnétique, typiquement un matériau piézo-électrique ou un matériau magnétostrictif, ne peut être envisagée que pour des déplacements très faibles. Or les résolutions optiques accessibles avec les dispositifs de l'art antérieur étaient telles qu'elles nécessitaient des déplacements de compensation ayant une amplitude trop élevée pour que l'utilisation de tels matériaux puisse être envisagée.

Le dispositif selon l'invention peut présenter les caractéristiques avantageuses, mais facultatives, suivantes, prises séparément ou en combinaison:

- les moyens de déplacement comprennent plusieurs transducteurs, chaque transducteur produisant un déplacement du capteur par rapport à l'engin spatial,
- orthogonal par rapport au déplacement produit par chaque autre transducteur;

- des moyens d'asservissement de chaque transducteur, sont en outre prévus, qui sont aptes à compenser les mouvements de perturbations affectant la position du capteur par rapport à un objet observé ;
- le matériau actif est directement monté sur une matrice de capteurs d'observation pour former une structure intégrée ;
- chaque capteur d'observation est un élément photosensible à transfert de charges.

Selon un autre aspect, l'invention concerne un dispositif étant destiné à déplacer de manière contrôlée, selon au moins un degré de liberté, un dispositif de prise de vue par rapport à l'engin spatial. Il comporte en outre des moyens de déplacement comprenant un transducteur en un matériau actif apte à se déformer sous l'effet d'un champ électrique et/ou d'un champ magnétique. Un tel dispositif permet notamment de compenser le bougé lié aux mouvements d'un engin spatial par rapport à un objet distant de cet engin, et en particulier ceux correspondant à des déplacements sur une trajectoire.

Un tel dispositif, couplé à un système de commande générateur d'une loi de déplacement volontaire et dépendant du comportement de la plate forme sur laquelle est monté le dispositif de prise de vue, ainsi que du type de prise de vue souhaité réalise, pour un coût et un poids négligeable, une fonction permettant d'obtenir le maximum de la résolution et de la largeur de balayage d'un système optique véhiculé par un engin spatial, sans engendrer de pertes énergétiques.

Selon encore un autre aspect, l'invention est un engin spatial comportant un dispositif de prise de vue tel que mentionné ci-dessus.

Selon encore un autre aspect, l'invention est un p Procédé de prise de vue dans l'espace comprenant une opération consistant à déplacer un dispositif de prise de vue par rapport à un engin spatial, caractérisé par le fait que cette opération est réalisée par la déformation, sous l'effet d'un champ électrique et/ou d'un champ magnétique, d'un matériau actif intercalé entre le dispositif de prise de vue et l'engin spatial et en ce qu'on pilote ledit transducteur afin déplacer le capteur d'observation suivant une loi de contrôle variable adaptée à la compensation des mouvements induits par la dynamique de vol du satellite.

Le procédé selon l'invention présente avantageusement, mais de manière facultative, les caractéristiques suivantes prises indépendamment ou séparément :

- il comporte une opération consistant à compenser le bougé lié aux mouvements d'un engin spatial par rapport à un objet à observer distant de cet engin, et en particulier ceux correspondant à des déplacements de cet engin sur une trajectoire;
- il comporte une opération consistant à incliner, grâce au matériau actif, une matrice de capteurs d'observation s'étendant principalement dans un plan, par rapport à la tangente à la trajectoire de l'engin spatial ;
- il comporte une opération consistant à prendre une première vue de l'objet à observer, en un premier lieu de la trajectoire, puis une deuxième vue de cet objet, en aval de ce premier lieu, pour former une image stéréoscopique de cet objet ;
- il comporte une opération consistant à déplacer, entre deux prises de vues de l'objet à observer, le dispositif de prise de vue, latéralement par rapport à la trajectoire de l'engin, pour former une image stéréoscopique de cet objet;
- il comporte une opération consistant à réaliser une rotation du dispositif de prise de vue, autour d'un axe perpendiculaire à la trajectoire, pour former une image stéréoscopique de l'objet à observer; et
- il comporte une opération consistant à réaliser plusieurs prises de vue, correspondant à des positions du dispositif de prise de vue, juxtaposées les unes à côté des autres, en déplaçant le dispositif de prise de vue entre deux prises de vue, latéralement par rapport à la trajectoire de l'engin, pour former, après traitement de l'ensemble des prises de vue, une image correspondant à un champ plus large de l'objet à observer, que celle qui serait obtenue avec seulement une de ces prises de vues.

D'autres aspects, buts et avantages de l'invention seront mieux compris à l'aide de la description détaillée qui suit. L'invention sera également mieux comprise à l'aide des références aux dessins sur lesquels :

- la figure 1 représente schématiquement en perspective une matrice d'éléments photosensibles à transfert de charges, entrant dans la constitution d'un dispositif de prise de vue conforme à la présente invention ;
- la figure 2 est un schéma de principe, en perspective, d'une prise de vue au moyen d'une matrice du type de celle représentée sur la figure 1;
- la figure 3 représente schématiquement le bougé susceptible de se produire au cours d'une prise de vue telle que celle illustrée sur la figure 2 ;
- la figure 4 représente un dispositif de prise de vue conforme à la présente invention ;
- la figure 5 représente une variante du dispositif de prise de vue conforme à la présente invention, représenté sur la figure 4;
- la figure 6 représente encore une autre variante du dispositif de prise de vue conforme à la présente invention, représenté sur la figure 4 ou sur la figure 5 ;
- la figure 7 représente schématiquement un exemple de mise en oeuvre du procédé conforme à la présente invention ;
- la figure 8 représente une variante de l'exemple de mise en oeuvre du procédé conforme à la présente invention, représenté sur la figure 7 ;

- la figure 9 représente une autre variante des exemples de mise en oeuvre du procédé conforme à la présente invention, représentés sur la figure 7 ou sur la figure 8 ;
- la figure 10 représente encore une autre variante des exemples de mise en oeuvre du procédé conforme à la présente invention, représentés sur la figure 7, la figure 8 et la figure 9 ; et
- la figure 11 représente schématiquement encore une autre variante des exemples de mise en oeuvre du procédé conforme à la présente invention, représentés sur la figure 7, la figure 8, la figure 9 et la figure 10.

Un exemple de mise en oeuvre de l'invention est décrit ci-dessous dans le cadre de la prise de vue à partir d'un satellite.

Selon cet exemple, la prise de vue est réalisée grâce à un dispositif de prise de vue comportant une matrice bi-dimensionnelle d'éléments photosensibles à transfert de charges. Pour atteindre de hautes résolutions, ces éléments photosensibles à transfert de charge sont par exemple des photodiodes ayant une taille de l'ordre de 6 μ.

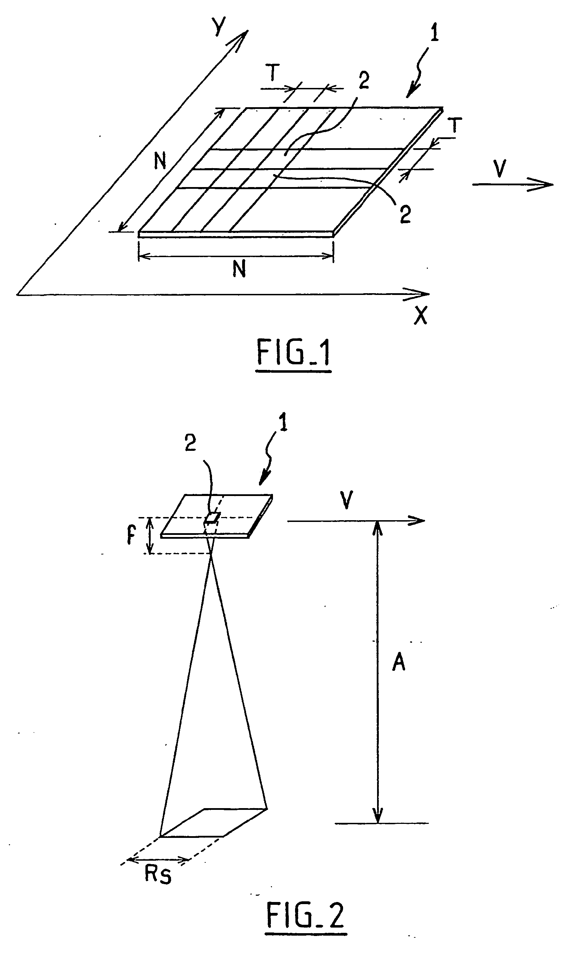

La figure 1 représente schématiquement une matrice 1 de capteurs 2 constituée de telles photodiodes. Par exemple, une matrice 1 peut comporter 4000 lignes de capteurs 2 sur 4000 colonnes de capteurs 2. Ces photodiodes sont alors mises en réseau avec un dispositif optique conjuguant la surface élémentaire de résolution au sol avec la surface du détecteur, c'est à dire celle correspondant à la taille d'une photodiode.

Ainsi, par exemple, pour une résolution au sol $R_s$ de l'ordre du mètre, un capteur ayant une taille T de l'ordre de 6μ, et une altitude A de l'ordre de 600 km, il faut utiliser une optique dont la focale est égale à :

$$F = \frac{A}{R_s}T = 3,6 \text{ m}$$

La focale étant ainsi imposée, il convient de faire en sorte que la tache de diffraction liée à l'ouverture de l'optique soit de l'ordre de grandeur de la taille du détecteur. Ce qui se traduit, pour une longueur d'onde λ, par la relation :

$$\frac{D}{F} \text{ de l'ordre de } \frac{\lambda}{T}$$

où D correspond au diamètre de la pupille d'entrée.

Ainsi, avec un capteur de taille T comprise entre 5 et 10 μ, une altitude A de 600 km et une longueur d'onde de l'ordre de 0,6 μ, la pupille a un diamètre de l'ordre de 30 cm.

Nous considérerons ci-dessous que le satellite se déplace selon une trajectoire V, la tangente à cette trajectoire V définissant une direction X. On définit la direction Y, perpendiculairement à la direction, X, dans un plan perpendiculaire à l'axe optique du dispositif de prise de vue. On définit également une direction Z perpendiculaire aux directions X et Y.

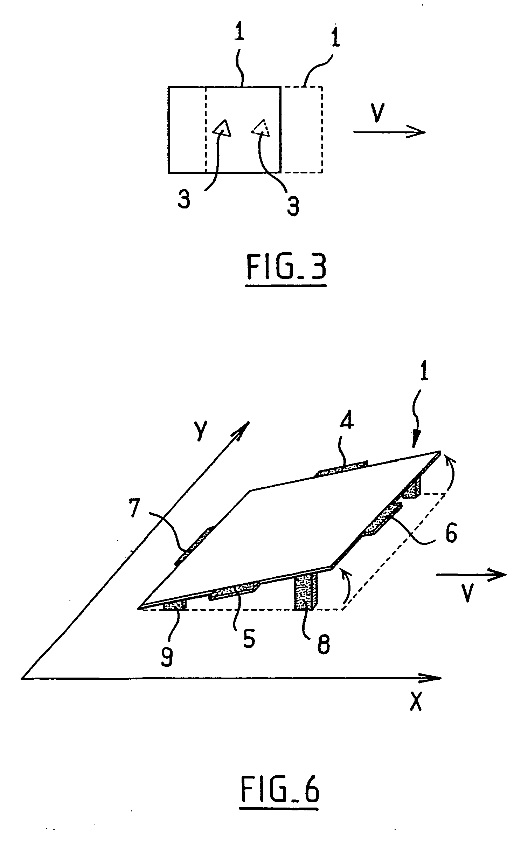

Comme représenté sur la figure 3, lorsque le satellite se déplace pendant le temps de pause, si la matrice 1 suit le satellite, l'image 3 d'un objet au sol sur la matrice 1 se déplace (à titre illustratif sur la figure 3, de la position en traits pleins, à la position en traits pointillés). Ceci est à l'origine du bougé. Pour que l'image ne soit pas affectée par ce bougé anéantissant la résolution visée, chaque capteur 2 doit se déplacer en sens inverse du déplacement du satellite sur sa trajectoire, à la même vitesse, et pendant toute la durée du temps de pause. Ainsi, un satellite ayant une vitesse de déplacement par rapport au sol de 8000 km/s, pendant un temps de pause de 500 μs (temps correspondant à un rapport signal sur bruit de 40 dB), se déplace de 4 m par rapport au sol, ce qui correspond à 4 pixels, chaque pixel correspondant à un capteur 2. Pour conserver une résolution de l'ordre du mètre, il conviendra donc de déplacer le dispositif de prise de vue de 4 pixels dans la direction opposée à celle de déplacement du satellite.

En fait, pour avoir un meilleur rapport signal sur bruit, le temps de pause doit être de 1 ms. Pour compenser le bougé pendant ce temps de pause, il suffit de commander un déplacement de 8 pixels. Le transducteur doit donc assurer un déplacement de 48 μm en 1 ms. Un tel déplacement est parfaitement compatible avec les caractéristiques tension-déplacement d'un transducteur piézo-électrique ou magnétostrictif.

On peut même envisager des compensations du bougé sur 2 ms, donc sur 16 pixels, ce qui, avec une optique de 30 cm de diamètre, permettrait des rapports signal sur bruit supérieurs à 60 dB (ce qui était inconcevable à ce jour avec des optiques aussi réduites).

La rigidité d'un matériau piézo-électrique, alliée à la finesse du contrôle de déplacement possible avec ce type de matériau, font de celui-ci un candidat idéal pour remplir cette fonction de compensation du bougé.

Ces transducteurs sont par exemple des capsules de niobiate de tithium commercialisées par SPK Electronics Co., LTD, avec une constante piézo électrique D égale ou supérieure à 1000.10-12 m/volt.

De tels transducteurs sont non seulement intéressants pour compenser le bougé dû au déplacement du satellite sur sa trajectoire, au cours la prise de vue, mais également pour compenser toutes les perturbations résiduelles durant cette prise de vue. Dans ce dernier cas, le transducteur est avantageusement inclus dans une boucle de contrôle. Jusqu'à présent les dispositifs de stabilisation utilisés pour compenser les perturbations résiduelles étaient plus coûteux et plus lourds que la solution selon l'invention.

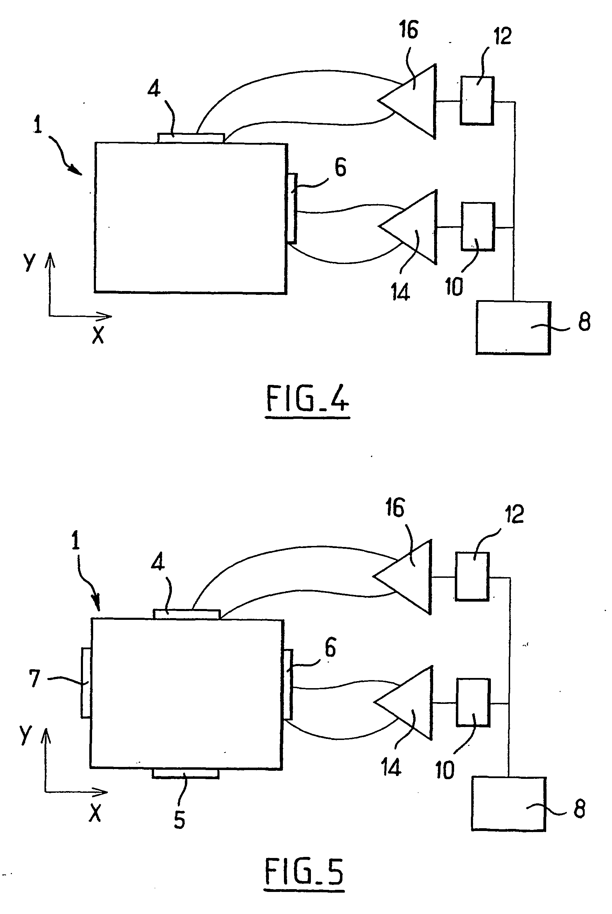

Comme représentée sur la figure 4, la matrice 1 comporte deux éléments transducteurs 4 et 6, contrôlés indépendamment l'un de l'autre. Chacun de ces transducteurs 4 ou 6 est disposé sur un côté du parallélépipède rectangle constitué par la matrice 1. Pour simplifier les explications ci-dessous, les côtés de ce parallélépipède sont parallèles aux directions X et Y. Bien entendu, d'autres orientations sont possibles. Les deux côtés munis chacun d'un transducteur 4 ou 6 sont adjacents.

Avantageusement, les transducteurs et la matrice forment une structure intégrée.

L'utilisation de deux transducteurs 4 et 6 opérant par des déplacements orthogonaux indépendants, permet de réaliser des mouvements selon une loi de déplacement quelconque. Ceci permet de gérer, par logiciel, des lois de commande de déplacements latéraux par rapport à la trajectoire V, des lois de déplacements d'avant en arrière, ou réciproquement, le long de la trajectoire V ou bien encore des situations complexes comme celles liées à la rotation terrestre.

Un microprocesseur 8 de pilotage calcule les corrections à apporter en temps réel. Les déformations des transducteurs 4, 6 peuvent être complexes étant donnée l'hystérèse mécanique affectant les transducteurs piézo-électriques, par exemple. Mais ces déformations étant modélisables, elles peuvent également être prises en compte dans les calculs du microprocesseur 8. Les résultats de ces calculs sont transmis à des convertisseurs analogique-numérique 10 et 12. Le signal analogique en sortie de chaque convertisseur analogique-numérique 10, 12 est transmis à un amplificateur 14, 16 qui alimente les transducteurs piézo-électriques 4, 6.

La commande des transducteurs 4, 6 se fait à l'aide de niveaux de tension relativement faibles car les déplacements générés par les transducteurs 4 et 6 sont de faible amplitude. Par exemple, avec des capsules du type de celles citées ci-dessus, avec un constante diélectrique D égale environ à $1000.10^{-12}$ m/volt, une épaisseur de 2 mm, l'application d'une tension de 18 kV permet un déplacement de 90 micromètres.

Un tel déplacement correspond à environ 10 pixels.

On utilise aussi avantageusement un empilement de couche de matériau piézo électrique, avec des électrodes en parallèle. On diminue ainsi la tension appliquée pour obtenir le déplacement voulu.

Par exemple avec neuf couches empilées, on peut réduire la tension appliquée à chaque couche à 2 kV. Cette tension est alors parfaitement compatible avec des dispositifs haute-tension courants. Avantageusement, on peut aussi utiliser un boîtier étanche rempli d'un gaz inerte, pour éviter les arcs électriques.

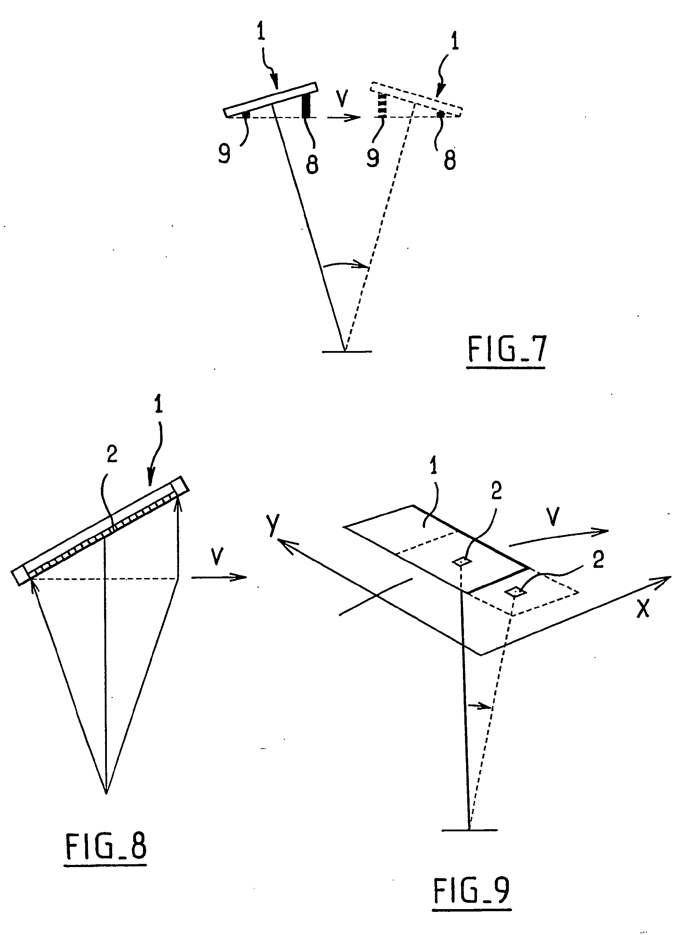

Comme représenté sur la figure 5, selon une variante avantageuse du dispositif selon l'invention représenté sur la figure 4, la matrice 1 est munie d'un transducteur 4, 5, 6 ou 7 sur chacun de ses bords parallèles aux directions X et Y. Selon cette variante, le déplacement de la matrice se fait en mode « tirer-pousser » (« push-pull »). Les transducteurs piézo-électriques 4, 5 et 6, 7 situés sur les côtés opposés de la matrice 1, perpendiculaires à l'une des directions X ou Y, sont commandés par des tensions opposées.

Comme représenté sur la figure 6, selon encore une autre variante avantageuse des dispositifs selon l'invention représentés sur les figures 4 et 5, la matrice 1 est munie de transducteurs 4, 5, 6, et 7, sur chacun de ses bords parallèles aux directions X et Y, pour commander des déplacements selon ces mêmes directions. Mais elle est en outre munie de transducteurs 8 et 9 agencés de manière à opérer un déplacement selon la direction Z. Si plusieurs transducteurs 8 et 9 indépendants, agencés pour opérer un déplacement selon la direction Z, sont fixés en différents points de la matrice 1, il est possible de générer un basculement de la matrice 1 par rapport au plan comprenant des axes parallèles aux directions X et Y. Autrement dit, ce basculement est une opération consistant à incliner, la matrice 1, par rapport à la tangente à la trajectoire V du satellite.

Comme représenté sur la figure 7, ce basculement offre la possibilité de prendre une première vue de l'objet à observer en un premier lieu de la trajectoire du satellite (en traits pleins sur la figure 7), puis une deuxième vue de cet objet, en aval de ce premier lieu (en traits pointillés sur la figure 7), pour former une image stéréoscopique de cet objet.

Comme représenté sur la figure 8, ce basculement permet également de réaliser une prise de vue d'une image plus petite mais avec plus de capteurs 2. Cette opération permet d'augmenter davantage la résolution de la prise de vue. La distorsion de la prise de vue ainsi réalisée, due à l'inclinaison de la matrice 1 par rapport à l'axe optique du dispositif de prise de vue, peut aisément être corrigée, par un traitement de l'image enregistrée. Ce traitement peut éventuellement avoir lieu au sol. Ce basculement de la matrice 1, par rapport à la tangente à la trajectoire du satellite, peut avantageusement être combiné à un déplacement fin de compensation du bougé.

Comme représenté sur la figure 9, le déplacement selon les directions parallèles aux axes X et Y, permet de déplacer, entre deux prises de vues de l'objet à observer, le dispositif de prise de vue, latéralement par rapport la trajectoire de l'engin, pour former une image stéréoscopique de cet objet.

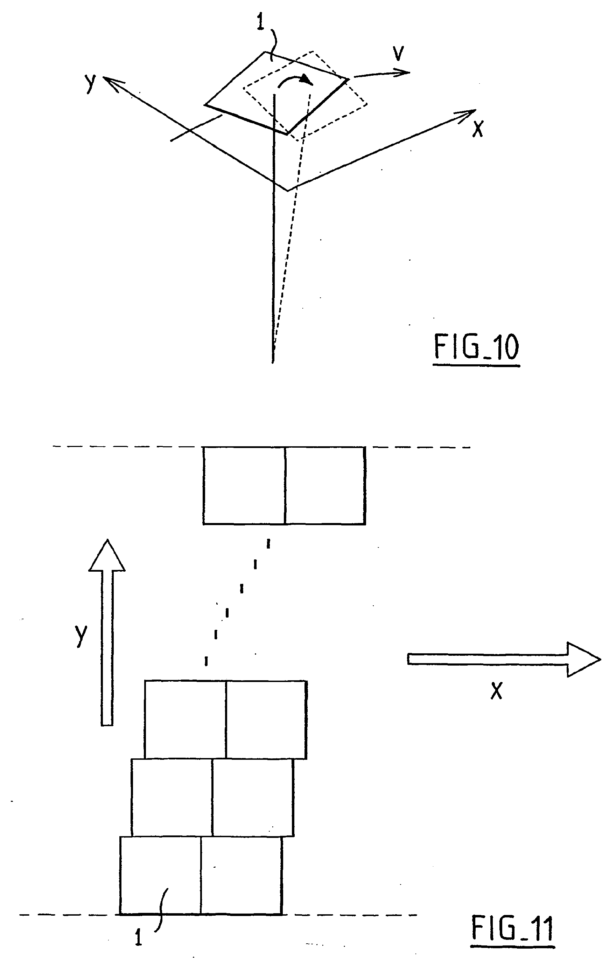

Comme représenté sur la figure 10, le déplacement selon les directions parallèles aux axes X et Y, permet de déplacer, entre deux prises de vues de l'objet à observer, le dispositif de prise de vue, selon une rotation, autour d'un axe perpendiculaire à la trajectoire, pour former une image stéréoscopique de l'objet à observer.

Comme représenté sur la figure 11, il est également possible, grâce au procédé selon l'invention, de réaliser plusieurs prises de vue, correspondant à des positions du dispositif de prise de vue, juxtaposées les unes à côté des autres. Le dispositif de prise de vue entre deux prises de vue, est alors déplacé latéralement par rapport à la trajectoire du satellite, pour former, après traitement de l'ensemble des prises de vue, une image correspondant à un champ plus large de l'objet à observer, que celle qui serait obtenue avec seulement une de ces prises de vues. On peut ainsi réaliser un procédé de prise de vue inconnu jusqu'alors, autorisant des résolutions métriques avec des largeurs de champs multiples de la dimension T d'un capteur 2.

Par exemple, une matrice de 4000 capteurs par 4000 capteurs, permet de couvrir une surface au sol de 4 km par 4 km. Pour couvrir une surface correspondant à un carré de 40 km de côté, il faudrait une matrice de 40000 capteurs par 40000 capteurs. Une autre solution consiste à déplacer une matrice 1 comprenant un plus petit nombre de capteurs 2.

Ainsi, si le satellite avance de 4 km par rapport au sol (4000 pixels) en 4,8 ms, on peut compenser le bougé tout en faisant 9 prises de vue avec des temps de pose de 500 $\mu$s. Il est alors possible d'obtenir une largeur de trace, c'est à dire la distance balayée par la matrice latéralement par rapport à la trajectoire, égale à 36 km, avec une matrice 1 de 4000 capteurs 2.

L'invention a été décrite ci-dessus à l'aide d'un exemple de dispositif de prise de vue dans lequel, la prise de vue est réalisée grâce à une matrice d'éléments photosensibles à transfert de charges. Mais d'autres capteurs que des d'éléments photosensibles à transfert de charges peuvent être utilisés pour mettre en oeuvre l'invention. En effet, il est aussi possible d'utiliser des capteurs à constante de temps plus élevées, tels que des capteurs dans le domaine de l'infrarouge moyen ou lointain ou des thermodétecteurs de type bolomètres. De tels capteurs étaient jusqu'à présent incompatibles, même pour des résolution modestes, avec la fréquence d'échantillonnage imposée par le défilement des satellites. Grâce à l'invention , on peut obtenir certaines résolutions jusqu'alors inaccessibles. Ainsi, on pourra par exemple détecter des feux de forêts avec une précision de 5 à 10 m, dans le thermique lointain.

Avantageusement, on peut également, grâce à l'invention, utiliser des capteurs peu coûteux et de qualité standard, mais en obtenant tout de même une qualité radiométrique de haut niveau, avec par exemple un rapport signal sur bruit supérieur à 40 dB.

L'invention a été décrite ci-dessus à l'aide d'un exemple de dispositif de prise de vue monté sur un satellite, il est évident que l'invention peut être mise en oeuvre dans d'autres applications, lorsque l'on veut réaliser une image d'un objet distant du dispositif de prise de vue et que les déplacements de ce dispositif sont de relativement faible amplitude. En particulier, on pourra utiliser d'autres types d'engins spatiaux que les satellites.

## Revendications

**1.** Dispositif de prise de vue destiné a être embarqué sur un engin spatial, comportant au moins un capteur d'observation et des moyens (4, 5, 6, 7, 8, 9) pour le déplacement contrôlé dudit dispositif par rapport a l'engin spatial selon au moins un degré de liberté, lesdits moyens de déplacement comportant au moins un transducteur en un matériau actif apte à se déformer de façon dynamique sous l'effet d'un champ électrique et/ou d'un champ magnétique variable, ainsi que des moyens de pilotage aptes a commander le transducteur afin de déplacer le capteur d'observation suivant une loi de contrôle **caractérisé en ce que** cette loi de contrôle varie pour être adaptée à la compensation des mouvements induits par la dynamique de vol de l'engin spatial, et **en ce que** les moyens (4, 5, 6, 7, 8, 9) de déplacement comprennent au moins deux transducteurs, le premier transducteur produisant un déplacement du capteur (2) par rapport à l'engin spatial, orthogonal par rapport au déplacement produit par le second transducteur.

**2.** Dispositif selon la revendication 1, **caractérisé par le fait que** le matériau actif est un matériau piézo-électrique.

**3.** Dispositif selon la revendication 1, **caractérisé par le fait que** le matériau actif est un matériau magnétostrictif.

**4.** Dispositif selon l'une des revendications précédentes, **caractérisé par le fait qu'**il comprend en outre des moyens d'asservissement de chaque transducteur, aptes à compenser les mouvements de perturbation affectant la position de chaque capteur (2) par rapport à un objet à observer.

**5.** Dispositif selon l'une des revendications précédentes, **caractérisé par le fait que** le matériau actif est directement monté sur une matrice (1) de capteurs (2) d'observation pour former une structure intégrée.

**6.** Dispositif selon l'une des revendications précédentes, **caractérisé par le fait que** chaque capteur (2) d'observation est un élément photosensible à transfert de charges.

**7.** Engin spatial comportant un dispositif de prise de vue, avec au moins un capteur (2) d'observation et des moyens (4, 5, 6, 7, 8, 9) de déplacement contrôlé du dispositif de prise de vue par rapport à l'engin spatial selon au moins un degré de liberté, lesdits moyens (4, 5, 6, 7, 8, 9) de déplacement comprenant au moins un transducteur en un matériau actif apte à se déformer sous l'effet d'un champ électrique et/ou d'un champ magnétique, ainsi que des moyens de pilotage aptes à commander le transducteur afin de déplacer le capteur d'observation suivant une loi de contrôle, **caractérisé en ce que** cette loi de contrôle varie pour être adaptée à la compensation des mouvements induits par la dynamique de vol de l'engin spatial et **en ce que** les moyens (4, 5, 6, 7, 8, 9) de déplacement comprennent au moins deux transducteurs, le premier transducteur produisant un déplacement du capteur (2) par rapport à l'engin spatial, orthogonal par rapport au déplacement produit par le second transducteur.

**8.** Procédé de prise de vue dans l'espace mis en oeuvre par un dispositif de prise de vue destiné a être embarqué sur un engin spatial, comportant au moins un capteur d'observation et des moyens (4, 5, 6, 7, 8, 9) pour le déplacement contrôlé dudit dispositif par rapport a l'engin spatial selon au moins un degré de liberté, lesdits moyens de déplacement comportant au moins un transducteur en un matériau actif, le procédé comprenant une opération consistant à déplacer le dispositif de prise de vue par rapport à l'engin spatial, ladite opération est réalisée par la déformation, sous l'effet d'un champ électrique et/ou d'un champ magnétique, du matériau actif intercalé entre le dispositif de prise de vue et l'engin spatial et par le pilotage dudit transducteur afin de déplacer le capteur d'observation suivant une loi de contrôle **caractérisé en ce que** elle est réalisée également par la commande d'au moins deux transducteurs, le premier transducteur produisant un déplacement du capteur (2) par rapport à l'engin spatial, orthogonal par rapport au déplacement produit par le second transducteur et **en ce que** ladite loi de contrôle varie pour être adaptée à la compensation des mouvements induits par la dynamique de vol de l'engin spatial.

**9.** Procédé selon la revendication 8, **caractérisé par le fait qu'**il comporte une opération consistant à compenser le bougé lié aux mouvements d'un engin spatial par rapport à un objet à observer distant de cet engin, et en particulier ceux correspondant à des déplacements de cet engin sur une trajectoire (V).

**10.** Procédé selon l'une des revendications 8 et 9, **caractérisé par le fait qu'**il comporte une opération consistant à incliner, grâce au matériau actif, une matrice (1) de capteurs (2) d'observation s'étendant principalement dans un plan, par rapport à la tangente à la trajectoire (V) de l'engin spatial.

**11.** Procédé selon la revendication 10, **caractérisé par le fait qu'**il comporte une opération consistant à prendre une première vue de l'objet à observer en un premier lieu de la trajectoire (V), puis une deuxième vue de cet objet, en aval de ce premier lieu, pour former une image stéréoscopique de cet objet.

**12.** Procédé selon l'une des revendications 8 à 11, **caractérisé par le fait qu'**il comporte une opération consistant à déplacer, entre deux prises de vues de l'objet à observer, le dispositif de prise de vue, latéralement par rapport la trajectoire (V) de l'engin, pour former une image stéréoscopique de cet objet.

**13.** Procédé selon l'une des revendications 8 à 12, **caractérisé par le fait qu'**il comporte une opération consistant à réaliser une rotation du dispositif de prise de vue, autour d'un axe perpendiculaire à la trajectoire (V), pour former une image stéréoscopique de l'objet à observer.

**14.** Procédé selon l'une des revendications 8 à 13, **caractérisé par le fait qu'**il comporte une opération consistant à réaliser plusieurs prises de vue, correspondant à des positions du dispositif de prise de vue, juxtaposées les unes à côté des autres, en déplaçant le dispositif de prise de vue entre deux prises de vue, latéralement par rapport à la trajectoire de l'engin, pour former, après traitement de l'ensemble des prises de vue, une image correspondant à un champ plus large de l'objet à observer, que celle qui serait obtenue avec seulement une de ces prises de vues.

**Claims**

**1.** A camera device for mounting on board a spacecraft, the camera device having at least one observation sensor and displacement means (4, 5, 6, 7, 8, 9) for controlled displacement of said device relative to the spacecraft with at least one degree of freedom, said displacement means comprising at least one transducer of an active material suitable for deforming dynamically under the effect of a variable electric and/or magnetic field, together with driver means suitable for controlling the transducer so as to displace the observation sensor in compliance with a control law, the device being **characterized in that** said control law varies in order to be adapted to compensating movements induced by the flight dynamics of the spacecraft, and **in that** the displacement means (4, 5, 6, 7, 8, 9) comprise at least two transducers, the first transducer producing displacement of the sensor (2) relative to the spacecraft that is orthogonal relative to the displacement produced by the second transducer.

**2.** A device according to claim 1, **characterized by** the fact that the active material is a piezoelectric material.

**3.** A device according to claim 1, **characterized by** the fact that the active material is a magnetostrictive material.

**4.** A device according to any preceding claim, **characterized by** the fact that it further comprises servo-control means for each transducer, suitable for compensating disturbing movements affecting the position of each sensor (2) relative to an object to be observed.

5. A device according to any preceding claim, **characterized by** the fact that the active material is mounted directly on a matrix (1) of observation sensors (2) to form an integrated structure.

6. A device according to any preceding claim, **characterized by** the fact that each observation sensor (2) is a photosensitive charge transfer element.

7. A spacecraft including a camera device with at least one observation sensor (2) and displacement means (4, 5, 6, 7, 8, 9) for controlled displacement of the camera device relative to the spacecraft in at least one degree of freedom, said displacement means (4, 5, 6, 7, 8, 9) comprising at least one transducer of an active material suitable for deforming under the effect of an electric field and/or a magnetic field, together with driver means suitable for controlling the transducer so as to displace the observation sensor in compliance with a control relationship, the spacecraft being **characterized in that** said control relationship varies in order to be adapted to compensating the movements induced by the flight dynamics of the spacecraft, and **in that** the displacement means (4, 5, 6, 7, 8, 9) comprise at least two transducers, the first transducer producing displacement of the sensor (2) relative to the spacecraft that is orthogonal relative to the displacement produced by the second transducer.

8. A method of imaging in space, implemented by a camera device for placing on board a spacecraft and comprising at least one observation sensor and displacement means (4, 5, 6, 7, 8, 9) for controlled displacement of the camera device relative to the spacecraft with at least one degree of freedom, said displacement means (4, 5, 6, 7, 8, 9) comprising at least one transducer of an active material, the method including an operation consisting in displacing the camera device relative to the spacecraft, said operation being implemented by applying an electric field and/or a magnetic field to deform the active material interposed between the camera device and the spacecraft, and by driving said transducer in such a manner as to displace the observation sensor in compliance with a control relationship, the method being **characterized in that** it is also implemented by controlling at least two transducers, the first transducer producing displacement of the sensor (2) relative to the spacecraft that is orthogonal relative to the displacement produced by the second transducer, and **in that** said control relationship varies in order to be adapted to compensating the movements induced by the flight dynamics of the spacecraft.

9. A method according to claim 8, **characterized by** the fact that it includes an operation consisting in compensating the blurring associated with the movements of a spacecraft relative to an object to be observed that is remote from said spacecraft, and in particular the movements corresponding to the displacement of said spacecraft along a trajectory (V).

10. A method according to claim 8 or claim 9, **characterized by** the fact that it includes an operation consisting in using the active material to cause a matrix (1) of observation sensors (2) extending mainly in a plane to tilt relative to the tangent of the trajectory (V) of the spacecraft.

11. A method according to claim 10, **characterized by** the fact that it includes an operation consisting in taking a first image of the object to be observed from a first position on the trajectory (V), and then a second image of said object from a position downstream from said first position, in order to form a stereoscopic image of the object.

12. A method according to any one of claims 8 to 11, **characterized by** the fact that, between taking two images of the object to be observed, it includes an operation consisting in displacing the camera device laterally relative to the trajectory (V) of the spacecraft to form a stereoscopic image of the object.

13. A method according to any one of claims 8 to 12, **characterized by** the fact that it includes an operation consisting in causing the camera device to turn about an axis perpendicular to the trajectory (V) in order to form a stereoscopic image of the object to be observed.

14. A method according to any one of claims 8 to 13, **characterized by** the fact that it includes an operation consisting in taking a plurality of images corresponding to the camera device occupying positions that are juxtaposed beside one another by displacing the camera device between taking two images, the device being displaced laterally relative to the trajectory of the spacecraft so as to form, after processing all of the images, an image of the object to be observed that corresponds to a field that is wider than that which would be obtained using only one of said images.

**Patentansprüche**

1. Vorrichtung zur Bildaufnahme, die dafür vorgesehen ist, in einem Raumfahrzeug mitgeführt zu werden und die wenigstens einen Aufnahmesensor und Mittel (4, 5, 6, 7, 8, 9) zur kontrollierten Bewegung der Vorrichtung relativ zum Raumfahrzeug in wenigstens einem Freiheitsgrad umfaßt, wobei die Mittel zur Bewegung wenigstens folgendes umfassen: einen Wandler aus einem aktiven Material, das dafür geeignet ist, sich unter der Wirkung eines veränderlichen elektrischen Feldes und/oder magnetischen Feldes auf dynamische Weise zu verformen, sowie Mittel zur Steuerung, die dafür geeignet sind, den Wandler zu steuern, um den Aufnahmesensor gemäß einer Steuerungsvorschrift zu bewegen, **dadurch gekennzeichnet, daß** diese Steuerungsvorschrift sich verändert, um für die Kompensation der durch die Flugdynamik des Raumfahrzeugs bewirkten Bewegungen angepaßt zu werden, und dadurch, daß die Bewegungsmittel (4, 5, 6, 7, 8, 9) wenigstens zwei Wandler umfassen, wobei der erste Wandler eine Bewegung des Sensors (2) relativ zum Raumfahrzeug verursacht, die orthogonal ist relativ zu der vom zweiten Wandler verursachten Bewegung.

2. Vorrichtung nach Anspruch 1, **dadurch gekennzeichnet, daß** das aktive Material ein piezoelektrisches Material ist.

3. Vorrichtung nach Anspruch 1, **dadurch gekennzeichnet, daß** das aktive Material ein magnetostriktifes Material ist.

4. Vorrichtung nach einem der vorhergehenden Ansprüche, **dadurch gekennzeichnet, daß** sie außerdem Mittel zur Regelkreissteuerung jedes Wandlers umfaßt, die dafür geeignet sind, die Störungsbewegungen zu kompensieren, die die Position jedes Sensors (2) relativ zu einem zu beobachtenden Objekt beeinträchtigen.

5. Vorrichtung nach einem der vorhergehenden Ansprüche, **dadurch gekennzeichnet, daß** das aktive Material direkt auf einer Matrix (1) der Aufnahmesensoren (2) angebracht ist, um eine integrierte Struktur zu bilden.

6. Vorrichtung nach einem der vorhergehenden Ansprüche, **dadurch gekennzeichnet, daß** jeder Aufnahmesensor (2) ein lichtempfindliches Element vom CCD-Typ ist.

7. Raumfahrzeug, das eine Vorrichtung zur Bildaufnahme umfaßt, mit wenigstens einem Aufnahmesensor (2) sowie mit Mitteln (4, 5, 6, 7, 8, 9) zur kontrollierten Bewegung der Bildaufnahmevorrichtung relativ zum Raumfahrzeug in wenigstens einem Freiheitsgrad, wobei die Mittel (4, 5, 6, 7, 8, 9) zur Bewegung wenigstens folgendes umfassen: einen Wandler aus einem aktiven Material, das dafür geeignet ist, sich unter der Wirkung eines elektrischen Feldes und/oder eines magnetischen Feldes zu verformen, sowie Steuerungsmittel, die dafür geeignet sind, den Wandler zu steuern, um den Aufnahmesensor gemäß einer Steuerungsvorschrift zu bewegen, **dadurch gekennzeichnet, daß** diese Steuerungsvorschrift sich verändert, um für die Kompensation der durch die Flugdynamik des Raumfahrzeugs bewirkten Bewegungen angepaßt zu werden, und dadurch, daß die Bewegungsmittel (4, 5, 6, 7, 8, 9) wenigstens zwei Wandler umfassen, wobei der erste Wandler eine Bewegung des Sensors (2) relativ zum Raumfahrzeug verursacht, die orthogonal ist relativ zu der vom zweiten Wandler verursachten Bewegung.

8. Verfahren zur Bildaufnahme im Weltraum, das mittels einer Vorrichtung zur Bildaufnahme angewendet wird, die dafür vorgesehen ist, in einem Raumfahrzeug mitgeführt zu werden und die wenigstens einen Aufnahmesensor und Mittel (4, 5, 6, 7, 8, 9) zur kontrollierten Bewegung der Vorrichtung relativ zum Raumfahrzeug in wenigstens einem Freiheitsgrad umfaßt, wobei die Mittel zur Bewegung wenigstens einen Wandler aus einem aktiven Material umfassen, wobei das Verfahren einen Vorgang umfaßt, der darin besteht, die Bildaufnahmevorrichtung relativ zum Raumfahrzeug zu bewegen, wobei der Vorgang, unter der Wirkung eines elektrischen Feldes und/oder eines magnetischen Feldes, durch die Verformung des aktiven Materials, das zwischen der Bildaufnahmevorrichtung und dem Raumfahrzeug eingefügt ist, und durch die Steuerung des Wandlers realisiert wird, um den Aufnahmesensor gemäß einer Steuerungsvorschrift zu bewegen, **dadurch gekennzeichnet, daß** er auch durch die Steuerung von wenigstens zwei Wandlern realisiert wird, wobei der erste Wandler eine Bewegung des Sensors (2) relativ zum Raumfahrzeug verursacht, die orthogonal ist relativ zu der vom zweiten Wandler verursachten Bewegung, und dadurch, daß die Steuerungsvorschrift sich verändert, um für die Kompensation der Bewegungen angepaßt zu werden, die von der Flugdynamik des Raumfahrzeugs bewirkt werden.

9. Verfahren nach Anspruch 8, **dadurch gekennzeichnet, daß** es einen Vorgang umfaßt, der darin besteht, die Verwacklungen zu kompensieren, die mit den Bewegungen eines Raumfahrzeugs relativ zu einem zu beobachtenden, entfernt von diesem Fahrzeug liegenden Objekt verbunden sind, und insbesondere diejenigen, die der Bewegung dieses Fahrzeugs auf einer Bahn (V) entsprechen.

10. Verfahren nach einem der Ansprüche 8 und 9, **dadurch gekennzeichnet, daß** es einen Vorgang umfaßt, der darin besteht, mittels des aktiven Materials eine Matrix (1) des Aufnahmesensors (2), die sich im wesentlichen in einer Ebene erstreckt, relativ zur Tangente an die Bahn (V) des Raumfahrzeugs zu neigen.

**11.** Verfahren nach Anspruch 10, **dadurch gekennzeichnet, daß** es einen Vorgang umfaßt, der darin besteht, eine erste Aufnahme des zu beobachtenden Objekts an einer ersten Stelle der Bahn (V) und dann eine zweite Aufnahme dieses Objekts, nach dieser ersten Stelle, zu machen, um ein stereoskopisches Bild dieses Objekts zu bilden.

**12.** Verfahren nach einem der Ansprüche 8 bis 11, **dadurch gekennzeichnet, daß** es einen Vorgang umfaßt, der darin besteht, zwischen zwei Aufnahmen des zu beobachtenden Objekts die Bildaufnahmevorrichtung seitlich zur Bahn (V) des Fahrzeugs zu bewegen, um ein stereoskopisches Bild dieses Objekts zu bilden.

**13.** Verfahren nach einem der Ansprüche 8 bis 12, **dadurch gekennzeichnet, daß** es einen Vorgang umfaßt, der darin besteht, eine Rotation der Bildaufnahmevorrichtung um eine Achse senkrecht zur Bahn (V) auszuführen, um ein stereoskopisches Bild des zu beobachtenden Objekts zu bilden.

**14.** Verfahren nach einem der Ansprüche 8 bis 13, **dadurch gekennzeichnet, daß** es einen Vorgang umfaßt, der darin besteht, mehrere Aufnahmen zu machen, die nebeneinanderliegenden Positionen der Bildaufnahmevorrichtung entsprechen, indem die Bildaufnahmevorrichtung zwischen zwei Aufnahmen relativ zur Bahn des Fahrzeugs seitlich bewegt wird, um nach einer Verarbeitung der Gruppe von Aufnahmen ein Bild anzufertigen, das einem Gesichtsfeld des zu beobachtenden Objekts entspricht, das weiter ist als dasjenige, das man mit nur einer dieser Aufnahmen erhalten würde.

FIG.1

FIG.2

FIG.3

FIG.6

FIG.4

FIG.5

FIG_7

FIG_8

FIG_9

FIG.10

FIG.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5460341 A
- EP 697786 A